# EUROPEAN PATENT APPLICATION

(11) **EP 1 806 857 A1**
(43) Date of publication of application: **11.07.2007**
(21) Application number: 05788408.2
(22) Date of filing: 28.09.2005
(51) Int. Cl.: H04B 7/26, H04Q 7/38

(54) **BASE STATION DEVICE, MOBILE STATION DEVICE, AND TRANSMISSION RATE CONTROL METHOD**

(30) Priority: 18.10.2004 JP 2004303246
(71) Applicant: MATSUSHITA ELECTRIC INDUSTRIAL CO., LTD., Osaka 571-8501 (JP)
(72) Inventor: KAYAMA, Hidenori Matsushita Electric Industrial Co. Ltd, Osaka-shi, Osaka 540-6319 (JP); DUAN, Jinsong Matsushita Electric Industrial Co. Ltd, Osaka-shi, Osaka 540-6319 (JP)
(74) Representative: Grünecker, Kinkeldey, Stockmair & Schwanhäusser Anwaltssozietät
(86) International application number: PCT/JP2005/017845
(87) International publication number: WO 2006/043399

(57) **Abstract**

There are provided a base station device, a mobile station device, and a transmission rate control method capable of appropriately controlling the transmission rate. In the base station device (100), an upstream scheduling unit (150) calculates a desired transmission power reduction ratio of a mobile station device whose transmission power is to be reduced among the mobile stations devices in which upstream packet communication is in progress and which is in the soft handover state, and transmits the desired transmission power reduction ratio. Thus, the mobile station device (300) which receives the desired transmission power reduction ratio can get a direct index concerning the transmission power reduction and it can select an appropriate transmission power and an appropriate transmission rate for it. Moreover, the base station device (100) can rapidly make an adjustment to an appropriate reception power level since the mobile station device (300) rapidly makes an adjustment to an appropriate transmission power according to the desired transmission power reduction ratio. That is, it is possible to realize a base station device, a mobile station device, and a transmission rate control method capable of performing an appropriate transmission rate control.

## Description

### Technical Field

The present invention particularly relates to a mobile station apparatus that performs soft handover in moving between cells, a base station apparatus that communicates with the mobile station apparatus, and a transmission rate control method.

### Background Art

In recent years, HSUPA (High Speed Uplink Packet Access) has been studied as transmission standards for increasing the speed of packet communication on uplink in W-CDMA (Wideband-Code Division Multiple Access). In this HSUPA, the E-DCH (Enhanced-Dedicated CHannel) is provided as the dedicated channel for transmitting uplink packets. Further, in HSUPA, sector throughput is enhanced by introducing AMC (Adaptive Modulation Coding Scheme), HARQ (Hybrid Automatic Repeat reQuest), NodeB Controlled Scheduling or the like.

The power of this E-DCH occupies part of reception power in a base station apparatus, other than thermal noise power, interference power by other cells, and power of dedicated channels for use in communication of speech and the like. In other words, it is possible to assign the E-DCH to the power, in which three kinds of power--that is, the thermal noise power, interference power by other cells and dedicated channel power--are removed from the maximum reception power that the base station apparatus is able to receive.

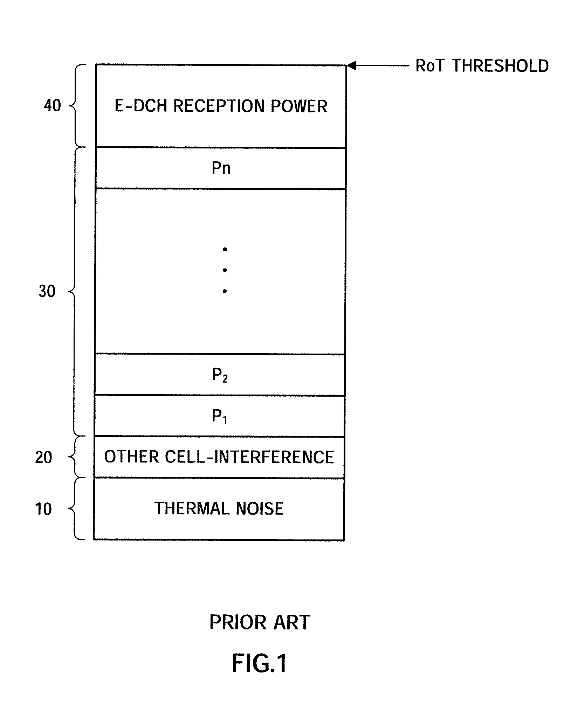

More specifically, for example, FIG.1 shows a breakdown of the reception power at a base station apparatus described in non-patent document 1. As shown in this figure, the maximum receivable reception power in the base station apparatus is determined as the RoT threshold (Rot (Rise Over Thermal) threshold) per base station apparatus, and the reception power in the base station apparatus includes thermal noise power 10, other-cell interference power 20, and dedicated channel reception power 30 from n mobile station apparatuses belonging to the cell of the base station apparatus. Then, the remaining reception power obtained by removing these kinds of power from the RoT threshold is E-DCH reception power 40 that can be assigned to the E-DCH.

Herein, since a plurality of mobile station apparatuses belong to the cell that the base station apparatus covers, it is necessary to efficiently assign E-DCH reception power 40 to these mobile station apparatuses and perform uplink packet communication. In other words, in FIG.1, it is necessary to assign E-DCH reception power 40 to mobile station apparatuses that perform high speed packet transmission among the plurality of mobile station apparatuses that belongs to the cell of the base station apparatus. Non-paten document 1 descloses that the base station apparatus performs scheduling to assign E-DCH reception power 40 to the mobile station apparatus efficiently.

In scheduling, the base station apparatus allocates the reception power of the base station apparatus that can be assigned to the E-DCH to the mobile station apparatuses in the cell of the base station apparatus. Then, the base station apparatus sometimes transmits instruction commands to the mobile station apparatuses to instruct them to increase/decrease a transmission rate to achieve the reception power assigned for the mobile station apparatuses. In other words, the base station apparatus sometimes transmits to the mobile station apparatuses the instruction command "Up" for increasing a transmission rate when assigning higher reception power than the current power to the mobile station apparatus, transmits to the mobile station apparatus the instruction command "Keep" for keeping the transmission rate when assigning the same reception power as the current power to the mobile station apparatus, and further transmits to the mobile station apparatus the instruction command "Down" for decreasing the transmission rate when assigning lower reception power than the current power to the mobile station apparatus. As the instruction command of the transmission rate, Transport Format Combination may also be used.

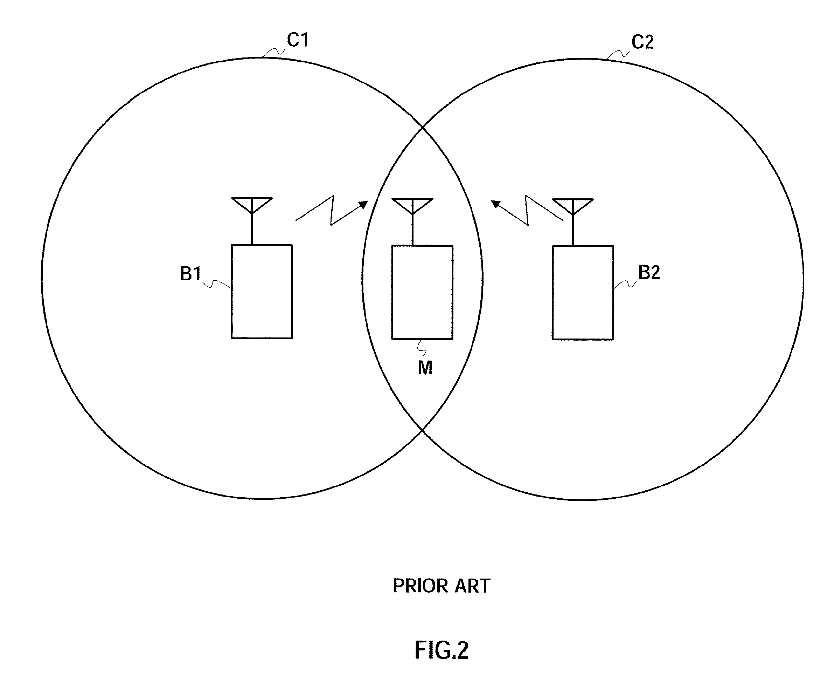

Further, the mobile station apparatus sometimes performs soft handover and communicates with a plurality of base station apparatuses when moving between cells that the base station apparatuses cover. In other words, for example, as shown in FIG.2, when mobile station apparatus M is positioned near the boundary between cell C1 and cell C2, mobile station apparatus M communicates with both of base station apparatus B1 that covers cell C1 and base station apparatus B2 that covers cell C2.

The scheduling method in this soft handover is described in non-patent document 2. In this scheduling method, the mobile station apparatus in soft handover determines a single primary base station (primary NodeB) from the plurality of base station apparatuses with which the mobile station apparatus is communicating. Then, the mobile station apparatus designates one or more base station apparatuses with which the mobile station apparatus is communicating except the primary base station apparatus as non-primary base stations (Non-primary NodeB).

Then, the mobile station apparatus reports whether primary NodeB or Non-primary NodeB to the base station apparatuses.

The primary base station receives report from the mobile station apparatus, transmits a transmission rate instruction command (TFC or "UP", "Keep" or "Down" instruction) and performs scheduling in the same way as in scheduling that the above-mentioned base station apparatus performs on mobile station apparatuses that are not performing handover. Meanwhile, the non-primary base stations transmit to the mobile station apparatus auxiliary information (for example, don't care/down command) on whether or not the transmission rate currently assigned to the mobile station apparatus is allowed in the cell of the base station.

The mobile station apparatus basically complies with the transmission rate instructed from the primary base station determined by the mobile station apparatus, and, considering the auxiliary information transmitted from the Non-primary base stations, determines the uplink transmission rate for the base station apparatus.
Non-patent Document 1: 3GPP TR25.896 V6.0.0 (2004-03)
Non-patent Document 2: 3GPP TSG-RAN WGI Meeting #38 Tdoc R1-040851 (Proposal document for 3GPP standardization).

### Disclosure of Invention

### Problems to be Solved by the Invention

However, in the conventional scheduling method, when the mobile station apparatus in soft handover complies with the transmission rate instruction command transmitted from the primary base station and, as the result, when excessive interference is given to the cell that the non-primary base station covers, the non-primary base station transmits, for example, a don't care/down command, but the mobile station apparatus cannot determine the degree to which the transmission rate (corresponding to a TFC level) is to be reduced to give no excessive interference against the cell of the non-primary base station.

Therefore, when the mobile station apparatus decreases the TFC level, which is reduced when receiving a don't care/down command, a long time is required until the transmission rate of the mobile station apparatus does not give excessive interference with the non-primary base station. As the result, the time becomes longer during which excessive interference is given to the non-primary base station.

On the other hand, when the mobile station apparatus increases the TFC level, which is reduced when receiving a don't care/down command, a possibility increases that the mobile station apparatus makes the transmission rate lower than necessary. As the result, throughput of the mobile station and throughput in the entire cell decrease.

Thus, the conventional scheduling method is hard to implement appropriate transmission rate control for the mobile station apparatus in soft handover.

It is therefore an object of the invention to provide a base station apparatus, mobile station apparatus and transmission rate control method that enable appropriate transmission rate control.

### Means for Solving the Problem

A base station apparatus of the invention adopts a configuration having: a transmission power reduction rate calculating section that calculates a transmission power reduction rate for a transmission power reduction target among mobile station apparatuses in soft handover states in uplink packet communication; and an informing section that transmits information of the transmission power reduction rate.

Amobile station apparatus of the invention adopts a configuration having: a receiving section that receives information of a transmission power reduction rate; and a transmission rate control section that obtains appropriate transmission power from a maximum reduction rate among the information of the transmission power reduction rate, and selects a transmission rate corresponding to the appropriate transmission power.

A transmission rate control method of the invention has the steps of: calculating a transmission power reduction rate for a transmission power reduction target among mobile station apparatuses in soft handover states in uplink packet communication; and transmitting the transmission power reduction rate.

### Advantageous Effect of the Invention

According to the present invention, it is possible to provide a base station apparatus, mobile station apparatus and transmission rate control method that enable appropriate transmission rate control.

### Brief Description of Drawings

FIG.1 shows an example of a breakdown of reception power in a base station apparatus;
FIG.2 shows an example of a mobile communication system;
FIG.3 is a block diagram showing a configuration of a base station apparatus according to Embodiment 1 of the invention;
FIG.4 is a diagram for explanation of a desired transmission power reduction rate in Embodiment 1;
FIG. 5 is a flow diagram for explanation of processing of an uplink scheduling section of FIG.3;
FIG.6 is a diagram showing a state of signaling by base station apparatuses for mobile station apparatuses of FIG.3;
FIG.7 is a block diagram showing a configuration of a mobile station apparatus according o Embodiment 1;
FIG. 8 is a flow diagram for explanation of processing of an uplink transmission rate control section of FIG.7;
FIG.9 is a block diagram showing a configuration of a base station apparatus according to Embodiment 2;
FIG.10 is a diagram for explanation of a desired transmission power reduction rate in Embodiment 2;
FIG.11 is a flow diagram for explanation of processing of an uplink scheduling section of FIG.9;
FIG.12 is a block diagram showing a configuration of a base station apparatus according to Embodiment 3;
FIG.13 is a diagram for explanation of a desired transmission power reduction rate in Embodiment 3; and
FIG.14 is a flow diagram for explanation of processing of an uplink scheduling section of FIG.12.

### Best Mode for Carrying Out the Invention

Embodiments of the present invention will be described below in detail with reference to the accompanying drawings. In the embodiments, the same components are assigned the same codes, and their descriptions will be omitted due to duplication.

### (Embodiment 1)

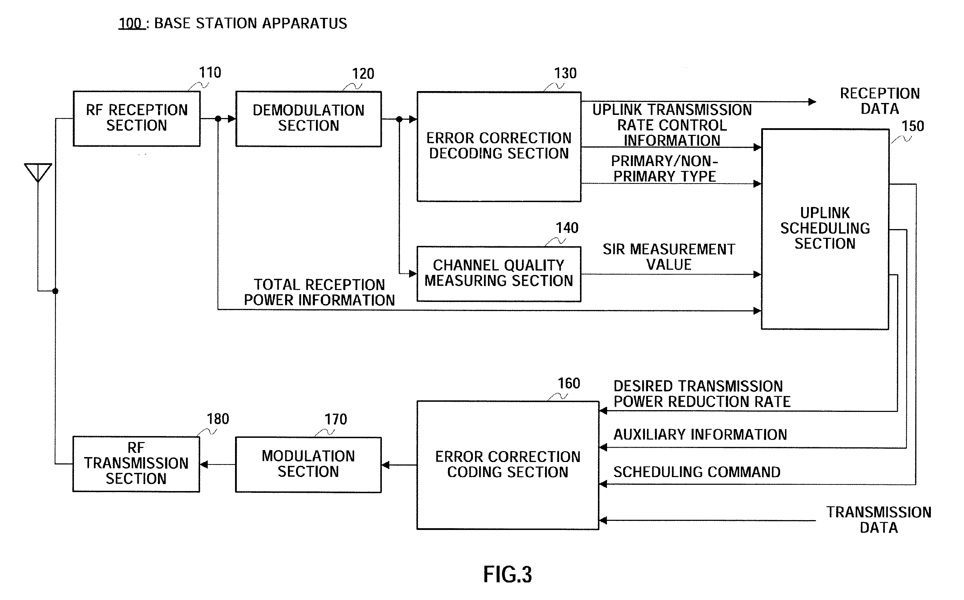

As shown in FIG.3, base station apparatus 100 of Embodiment 1 has RF (Radio Frequency) reception section 110; demodulation section 120; error correction decoding section 130; channel quality measuring section 140; uplink scheduling section 150; error correction coding section 160; modulation section 170; and RF transmission section 180.

RF reception section 110 converts a received signal with a radio frequency into a baseband signal and output the result to demodulation section 120. Further, RF reception section 110 outputs the total reception power information of the entire received signal to uplink scheduling section 150.

Demodulation section 120 demodulates the received signal, and outputs the demodulated received signal to error correction decoding section 130 and channel quality measuring section 140.

Error correction decoding section 130 performs error detection/error correction on the demodulated received signal, and outputs received data from the error corrected received signal, and outputs the uplink transmission rate control information and primary/non-primary type included in the received data to uplink scheduling section 150.

Channel quality measuring section 140 measures uplink channel quality, for example, SIR (Signal to Interference Ratio) of the communication terminal apparatuses from the demodulated received signal. Then, when the SIR is measured as the uplink channel quality, the SIR measurement value is outputted to uplink scheduling section 150.

Using the total reception power information, the SIR measurement value, and the decoded uplink transmission rate control information and primary/non-primary type, uplink scheduling section 150 generates a Scheduling command (including a transmission rate instruction command) for the mobile station apparatuses that designate base station apparatus 100 as the primary base station and output the command to error correction coding section 160.

Further, using the total reception power information, the SIR measurement value, and the decoded uplink transmission rate control information and primary/non-primary type, uplink scheduling section 150 generates auxiliary information (for example, don't care/down command) for the mobile station apparatuses that designate base station apparatus 100 as the non-primary base station, and further generates a desired transmission power reduction rate when excessive interference occurs in the cell that base station apparatus 100 covers due to the reception power by the mobile station apparatus that designates base station apparatus 100 as the non-primary base station, and output the desired transmission power reduction rate to error correction coding section 160.

In the embodiments, "excessive interference" means a state where the reception power indicated by the total reception power information exceeds the RoT threshold. Further, "excessive interference caused by the reception power by the mobile station apparatus that designates as the non-primary base station" means a case where the reception power indicated by the total reception power information exceeds the RoT threshold, and the excessive reception power is smaller than the reception power of the mobile station apparatus that designates the base station as the non-primary base station. The details of processing of uplink scheduling section 150 will be described later.

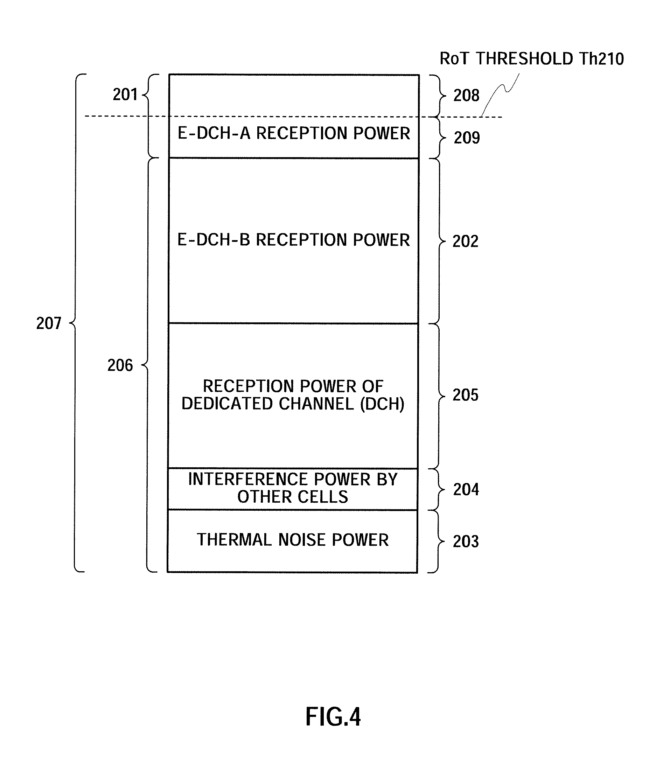

Here, the desired transmission power reduction rate in Embodiment 1 will be described with reference to FIG.4.

FIG.4 shows an example of a breakdown of the reception power when the cell that base station apparatus 100 covers is in an excessive interference state, and this excessive interference is caused by the reception power by the mobile station apparatus that designates base station apparatus 100 as the non-primary base station. In FIG.4, E-DCH-A reception power 201 is the reception power by mobile station apparatuses that use the E-DCH and designate base station apparatus 100 as the non-primary base station. E-DCH-B reception power 202 is the reception power by mobile station apparatuses that use the E-DCH and designate base station apparatus 100 as the primary base station. Reception power α206 is the power of the sum of thermal noise power 203, interference power 204 from other cells, DCH reception power 205 by mobile station apparatuses using the DCH, and E-DCH-B reception power 202. Then, total reception power 207 is the sum of the reception power α206 and E-DCH-A reception power 201.

Embodiment 1 reduces the E-DCH-A reception power until the desired E-DCH-A reception power and removes excessive reception power 208 that is part exceeding RoT threshold Th210 in the total reception power. Further, the current power of the mobile station apparatuses included in E-DCH-A is controlled to be decreased by the same rate. In other words, E-DCH-A reception power 201 is reduced until desired E-DCH-A reception power 209. Information to report this reduction rate to the mobile station apparatuses included in E-DCH-A is the "desired transmission power reduction rate."

Therefore, the desired transmission power reduction rate can be obtained by following equation (1). Desired transmission power reduction rate = desired E-DCH-A reception power/E-DCH-A reception power = (Rot threshold-reception power α)/E-DCH-A reception power...(1)

Referring to FIG. 3 again, error correction coding section 160 performs error correction coding on transmission signals obtained from transmission data, a Scheduling command, auxiliary information and desired transmission power reduction rate.

Modulation section 170 modulates the transmission signal after error correction coding and outputs the result to RF transmission section 180.

RF transmission section 180 performs predetermined radio transmission processing (D/A conversion, up-conversion and the like) on the transmission signal to transmit the result to the mobile station apparatus via an antenna.

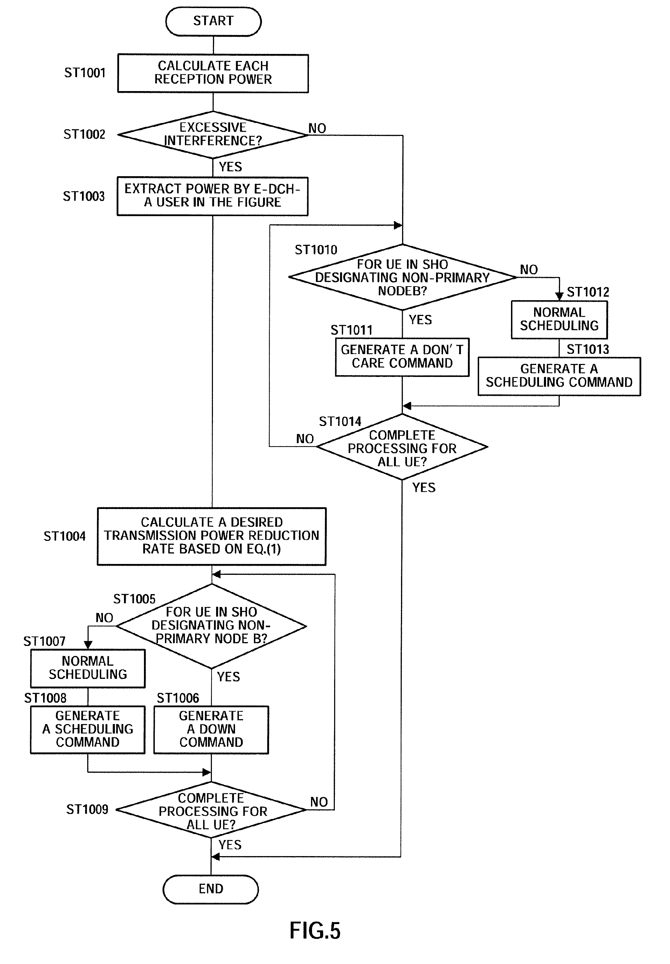

Next, the processing of uplink scheduling section 150 will be described in detail with reference to the flow diagram in FIG.5.

First, uplink scheduling section 150 calculates the reception power from the mobile station apparatuses based on the SIRmeasurement value, divides this reception power according to the states of the mobile station apparatuses--that is, mobile station apparatuses using dedicated channels and mobile station apparatuses using the E-DCH (this group is further divided into mobile station apparatuses that designate base station apparatus 100 as the primary base station and mobile station apparatuses that designate base station apparatus 100 as the non-primary base station), obtains the reception power for the groups, and obtains a breakdown of the reception power for the groups in the total reception power as shown in FIG.4 (step ST1001).

In step ST1002, uplink scheduling section 150 compares the total reception power information with the Ro T threshold to determine whether excessive interference occurs or not. Although with the embodiment, the descriptions will be made, assuming that "excessive interference" is the state where the reception power indicated by the total reception power information exceeds the RoT threshold, excessive interference may also be determined when a difference between the reception power indicated by the total reception power information and RoT threshold exceeds a predetermined threshold.

Upon determination that excessive interference occurs (step S1002: YES), uplink scheduling section 150 extracts the reception power by the E-DCH-A user (mobile station apparatus) in FIG.4, that is, reception power by the mobile station apparatus that designates base station apparatus 100 as the non-primary base station (step ST1003).

Next, uplink scheduling section 150 calculates the desired transmission power reduction rate based on the above-described equation (1) (step ST1004). Then, the processing holds the calculated desired transmission power reduction rate and shifts to step ST1005.

Further, in step ST1005, uplink scheduling section 150 determines whether or not scheduling is for the mobile station apparatus in soft handover that designates mobile station apparatus 100 as the non-primary base station (non-primary NodeB).

When it is determined that scheduling is for the mobile station apparatus in soft handover that designates base station apparatus 100 as the non-primary base station (step ST1005: YES), uplink scheduling section 150 generates a down command (step ST1006). This down command is transmitted to the mobile station apparatus that designates base station apparatus 100 as the non-primary base station, together with the held desired transmission power reduction rate.

When it is determined that scheduling is not for the mobile station apparatus in soft handover that designates as the non-primary base station (step ST1005: NO), uplink scheduling section 150 performs normal scheduling (step ST1007), and generates a Scheduling command (step ST1008). After the processing of steps ST1006 and ST1008, uplink scheduling section 150 determines whether or not scheduling is completed for all the mobile station apparatuses (step ST1009), and returns to step ST1005 when scheduling is not completed (step ST1009: NO), and ends the processing when scheduling is completed (step ST1009: YES).

Further, as the result of determination in step ST1002, when it is determined that excessive interference does not occur (step ST1002: NO), uplink scheduling section 150 determines whether or not scheduling is for a mobile station apparatus in soft handover that designates base station apparatus 100 as the non-primary base station (step ST1010).

When it is determined that scheduling is for the mobile station apparatus in soft handover that designates base station apparatus 100 as the non-primary base station (No-primary NodeB) (step ST1010: YES), uplink scheduling section 105 generates a don't care command (step ST1011).

When it is determined that scheduling is not for the mobile station apparatus in soft handover that designates base station apparatus 100 as the non-primary base station (step ST1010: NO), uplink scheduling section 150 performs normal scheduling (step ST1012) and generates a Scheduling command (step ST1013) . After the processing of steps ST1011 and ST1013, uplink scheduling section 150 determines whether or not scheduling is completed for all the mobile station apparatuses (step ST1014), and returns to step ST1010 when scheduling is not completed (step ST1014: NO), and ends the processing when scheduling is completed (step ST1014: YES).

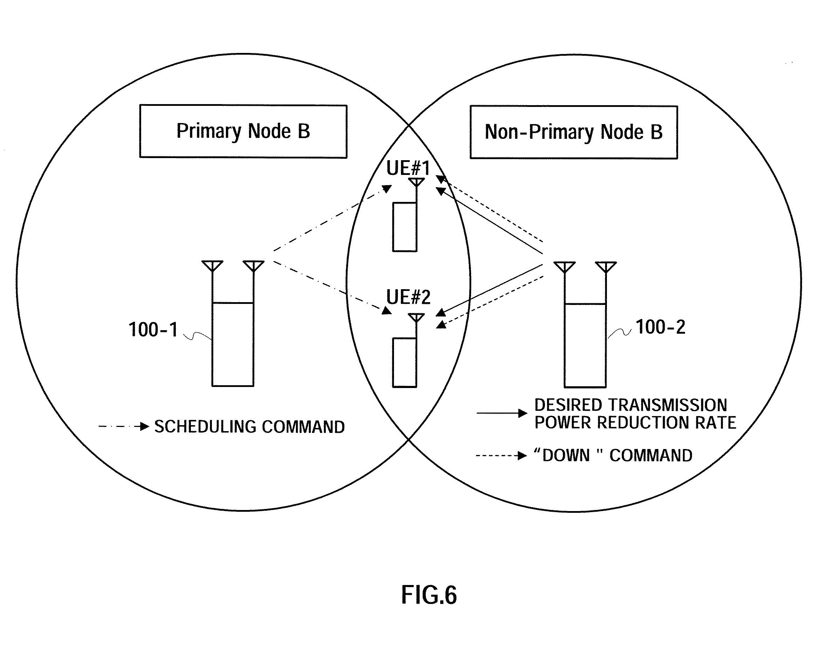

FIG. 6 shows the above described state of signaling by base station apparatuses 100 for the mobile station apparatuses. In FIG.6, particularly, mobile station apparatuses #1 and #2 are in soft handover using the E-DCH, and designate base station apparatus 100-1 as the primary base station (primary NodeB), and designates base station apparatus 100-2 as the non-primary base station (non-primary NodeB). Further, the cell that base station apparatus 100-2 covers is in the excessive interference state caused by the reception power by mobile station apparatuses #1 and #2. For simplicity in description, two base station apparatuses and two mobile station apparatuses are shown, and the number of apparatuses is not particularly limited.

In FIG.6, base station apparatus 100-1 that is the primary base station transmits a Scheduling command to mobile station apparatuses #1 and #2. Meanwhile, base station apparatus 100-2 that is the non-primary base station transmits a down command and, in addition, desired transmission power reduction rate to mobile station apparatuses #1 and #2.

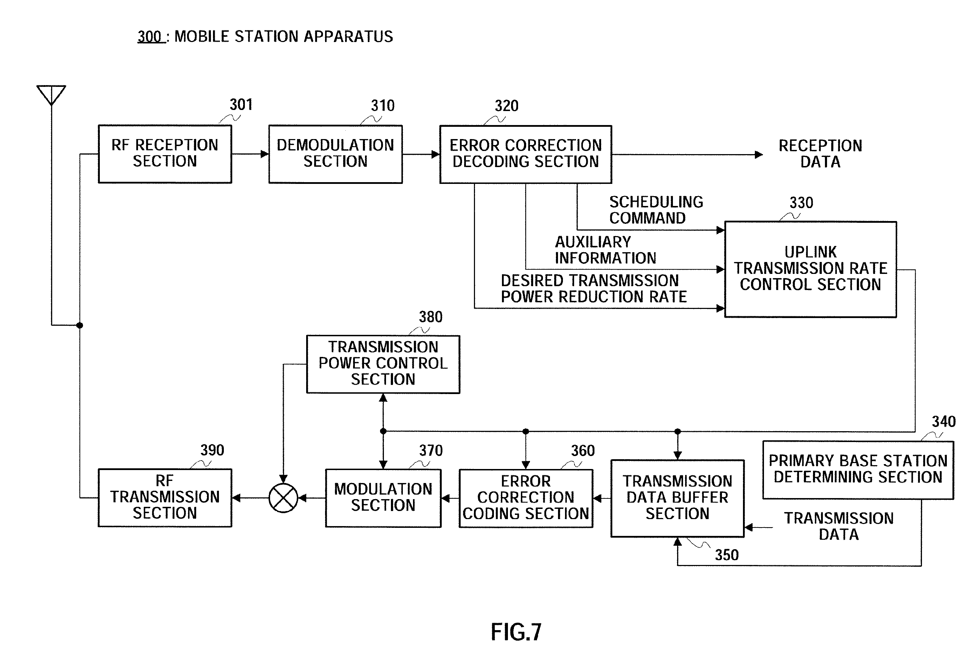

Next, as shown in FIG. 7, mobile station apparatus 300 of Embodiment 1 has RF reception section 301; demodulation section 310; error correction decoding section 320; uplink transmission rate control section 330; primary base station determining section 340; transmission data buffer section 350; error correction coding section 360; modulation section 370; transmission power control section 380; and RF transmission section 390.

RF reception section 301 converts a received signal with a radio frequency into a baseband signal and output the signal to demodulation section 310.

Demodulation section 310 demodulates the received signal, and outputs the demodulated received signal to error correction decoding section 320.

Error correction decoding section 320 performs error detection/error correction on the demodulated received signal, outputs the received data from the error corrected received signal, outputs a Scheduling command, auxiliary information (for example, don't care/down command) and desired transmission power reduction rate included in the received data to uplink transmission rate control section 330. All of the Scheduling command, the don't care/down command and the desired transmission power reduction rate are output when mobile station apparatus 300 using the E-DCH is in soft handover, and the base station apparatus that the mobile station apparatus 300 using the E-DCH designates as the non-primary base station is subjected to excessive interference caused by the reception power by that mobile station apparatus 300 (whichmaybe one or more apparatuses, and is not limited in number) that designates the base station appratus as the non-primary base station.

Uplink transmission rate control section 330 determines the uplink transmission rate using the Scheduling command transmitted from the primary base station and the don't care/down command and the desired transmission power reduction rate transmitted from the non-primary base station, which are output from error correction decoding section 320. Details of uplink transmission rate control section 330 will be described later.

primary base station determining section 340 determines the primary base station when mobile station apparatus 300 is in soft handover, and outputs primary base station designation information for the primary base station and non-primary base station designation information for the non-primary base station to error correction coding section 360.

Transmission data buffer section 350 outputs transmission data to error correction coding section 360 in accordance with the uplink transmission rate determined in uplink transmission rate control section 330.

Error correction coding section 360 performs error correction coding on the transmission signal obtained from the transmission data, primary base station designation information and non-primary base station designation information, in accordance with the uplink transmission rate determined in uplink transmission rate control section 330.

Modulation section 370 modulates the transmission signal after the error correction coding in accordance with the uplink transmission rate determined in uplink transmission rate control section 330 and outputs the result to RF transmission section 390.

Transmission power control section 380 controls the amplification level of the output signal from modulation section 370, in accordance with the transmission power corresponding to the uplink transmission rate determined in uplink transmission rate control section 330.

RF transmission section 390 performs predetermined radio processing on the transmission signal from modulation section 370, which is subjected to transmission power control, and transmits the signal to the base station apparatus via an antenna.

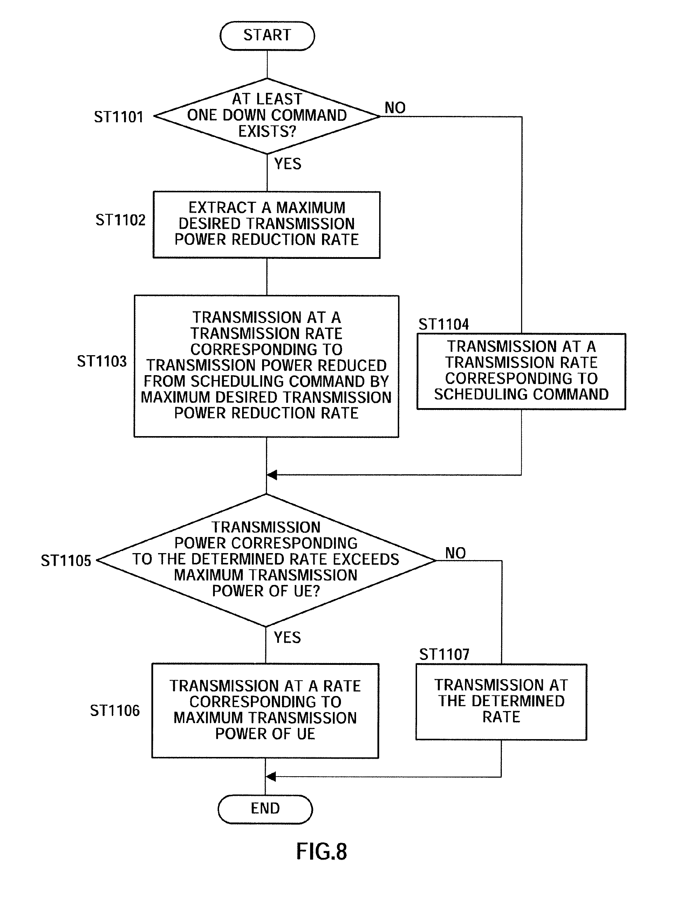

Next, the processing of uplink transmission rate control section 330 will be described in detail with reference to the flow diagram of FIG.8. Particularly, FIG.8 shows the processing of uplink transmission rate control section 330 when mobile station apparatus 300 is in soft handover.

In step ST1101, uplink transmission rate control section 330 determines whether or not at least one down command exists in commands received from non-primary base stations.

As the result of determination, when at least one down command exits (step ST1101: YES), uplink transmission rate control section 330 extracts a maximum value (maximum desired transmission power reduction rate) from the desired transmission power reduction rates similarly received from the non-primary base stations (step ST1102).

In step ST1103, uplink transmission rate control section 330 multiplies the transmission power corresponding to the Scheduling command received from the primary base station by the maximum desired transmission power reduction rate, obtains the transmission power, and determines the transmission rate corresponding to this transmission power.

Meanwhile, as the result of determination in step ST1101, when there is no down command and all are don't care commands (step ST1101 : NO), uplink transmission rate control section 330 determines the transmission rate corresponding to the Scheduling command received from the primary base station (step ST1104).

In step ST1105, uplink transmission rate control section 330 determines whether or not the transmission power corresponding to the transmission rate determined in steps ST1103 and ST1104 exceeds the maximum transmission power of mobile station apparatus 300.

As the result of determination, when the transmission power corresponding to the determined transmission rate exceeds the maximum transmission power of mobile station apparatus 300 (step ST1105: YES), uplink transmission rate control section 330 determines the transmission rate corresponding to the maximum transmission power of mobile station apparatus 300.

Meanwhile, as the result of determination, when the transmission power corresponding to the determined transmission rate does not exceed the maximum transmission power of mobile station apparatus 300 (step ST1105: NO), uplink transmission rate control section 330 finally determines the transmission rate determined in steps ST1103 and ST1104 (step ST1107).

To summarize the above, when the cell of base station apparatus 100 is in the excessive interference state by the presence of mobile station apparatuses 300 in soft handover that designate base station apparatus 100 as the non-primary base station, base station apparatus 100 transmits a down instruction to mobile station apparatus 300 in the dedicated channel, informs each of mobile station apparatuses 300 of the common desired transmission power reduction rate on a shared channel. Each of mobile station apparatuses 300 selects a maximum rate from the desired transmission power reduction rates received respectively from non-primary base stations, and performs transmission at a transmission rate corresponding to the transmission power obtained by multiplying the transmission power corresponding to the transmission rate instructed from the primary base station, by the desired transmission power reduction rate.

In this way, by transmitting the desired transmission power reduction rate from base station apparatus 100, when receiving a down instruction, mobile station apparatus 300 is able to determine the number of ranks to be reduced from the transmission rate instructed from the primary base station, and promptly avoid excessive interference that mobile station apparatus 300 gives to the non-primary base station.

Thus, according to Embodiment 1, base station apparatus 100 is provided with uplink scheduling section 150 that calculates a desired transmission power reduction rate for a transmission power reduction target among the mobile station apparatuses in soft handover states in uplink packet communication, and transmits the desired transmission power reduction rate.

By this means, the mobile station apparatus receiving the desired transmission power reduction rate is able to acquire a direct indicator on transmission power reduction, thereby selecting appropriate transmission power and the transmission rate corresponding to this transmission power. Further, in base station apparatus 100, in contrast to the case that the conventional mobile station apparatus decreases the transmission rate by a fixed reduction level upon receiving a transmission rate instruction command "Down" from the base station apparatus, the mobile station apparatus promptly adjusts transmission power appropriately in accordance with the desired transmission power reduction rate, so that it is possible to promptly adjust the reception power to an appropriate level. In other words, it is possible to implement a base station apparatus that is able to perform appropriate transmission rate control.

Further, uplink scheduling section 150 selects mobile station apparatus 300 that transmits the non-primary base station designation information to base station apparatus 100 as the transmission power reduction target (that is, mobile station apparatus 300 that selects base station apparatus 100 as the non-primary base station), and calculates, as the desired transmission power reduction rate, a ratio of the reception power (E-DCH-A reception power 201) of mobile station apparatus 300 that transmits the non-primary base station designation information and the desired reception power (desired E-DCH-A reception power 209), when the cell that base station apparatus 100 covers is subjected to excessive interference caused by the reception power of mobile station apparatus 300 that transmits the non-primary base station designation information.

By this means, it is possible to adjust the reception power to an appropriate level without influencing on communication of mobile station apparatuses except mobile station apparatuses that designate base station apparatus 100 as the non-primary base station--that is, mobile station apparatuses with high priorities for base station apparatus 100--and calculate a just enough transmission power reduction rate.

Further, according to Embodiment 1, mobile station apparatus 300 is provided with uplink transmission rate control section 330 that receives information of the desired transmission power reduction rate from base station apparatuses 100, and selects the transmission rate corresponding to the transmission power obtained from the maximum reduction rate among the information of the desired transmission power reduction rate.

By this means, it is possible to obtain a direct indicator on transmission power reduction, thereby selecting appropriate transmission power and appropriate transmission rate corresponding to this transmission power. In other words, it is possible to implement a mobile station apparatus that is able to perform appropriate transmission rate control. Further, when the information of the desired transmission power reduction rate is received from a plurality of base station apparatuses, a transmission rate corresponding to the transmission power obtained from the maximum reduction rate is selected among the information, so that it is possible to make the reception power appropriate in all the base station apparatuses that transmit desired transmission power reduction rates.

### (Embodiment 2)

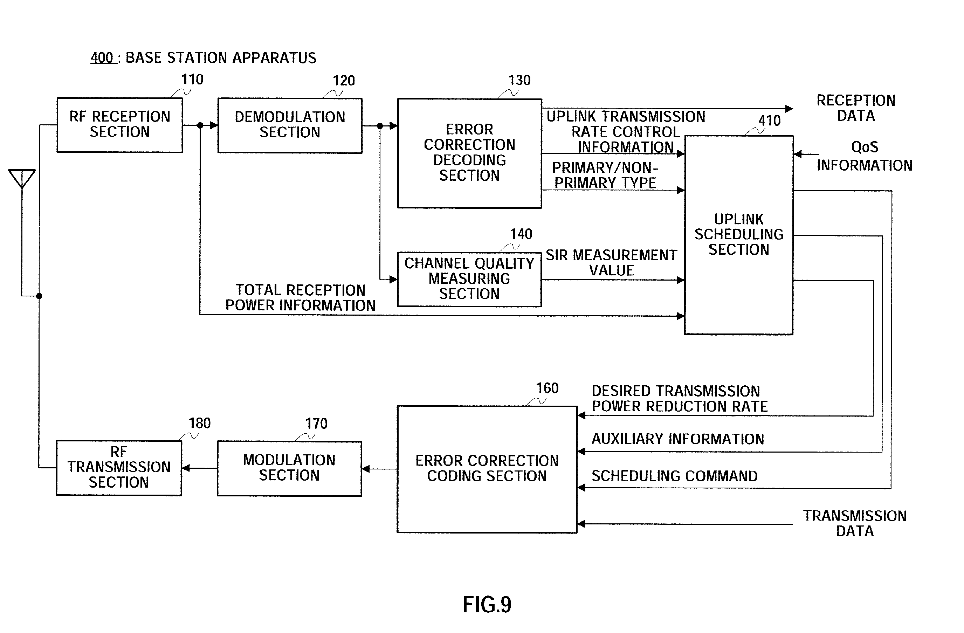

As shown in FIG.9, base station apparatus 400 of Embodiment 2 has uplink scheduling section 410. This uplink scheduling section 410 is the same as uplink scheduling section 150 in FIG.3 in that the uplink transmission rate control information, the primary/non-primary type and the SIR measurement value are input, but differs from uplink scheduling section 150 in that QoS information is further input.

Uplink scheduling section 150 generates the desired transmission power reduction rate when the cell that base station apparatus 400 of uplink scheduling section 150 covers is subjected to excessive interference caused by the reception power by the mobile station apparatus that designates bases station apparatus 400 as the non-primary base station. In contrast, uplink scheduling section 410 differs in generating a desired transmission power reduction rate for the mobile station apparatus when the cell that base station apparatus 400 of uplink scheduling section 410 covers is subjected to excessive interference caused by the reception power by the mobile station apparatus that designates base station apparatus 400 as the non-primary base station and that performs communication that belongs to a QoS class where a minimum guaranteed rate is not defined.

"The excessive interference is caused by the reception power by the mobile station apparatus that designates base station apparatus 400 as the non-primary base station and that performs communication that belongs to a QoS class where a minimum guaranteed rate is not defined" means a case where the reception power indicated by the total reception power information exceeds the RoT threshold, and the excessive reception power is smaller than the reception power of the mobile station apparatus that designates base station apparatus 400 as the non-primary base station and that performs communication that belongs to the QoS class where the minimum guaranteed rate is not defined. Details of processing of uplink scheduling section 410 will be described later.

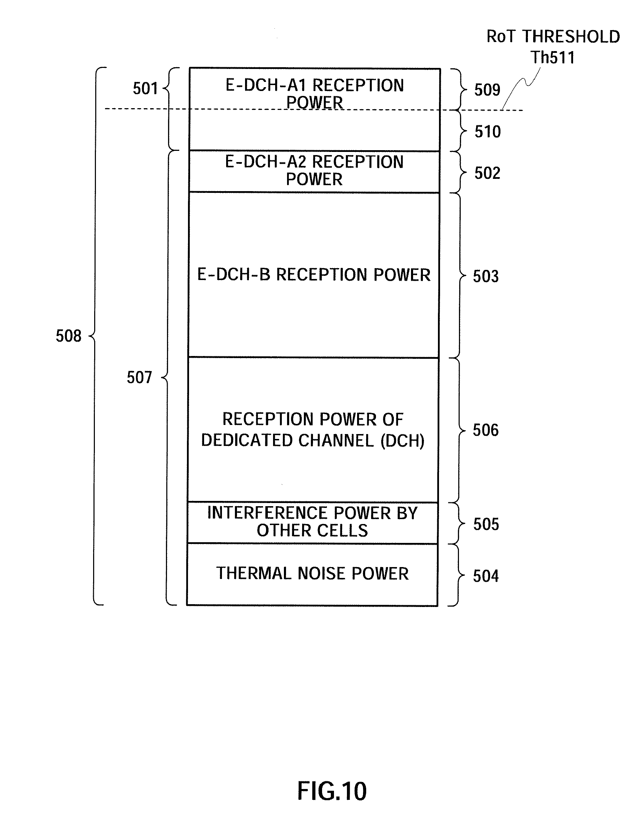

The desired transmission power reduction rate in Embodiment 2 will be described with reference to FIG.10.

FIG.10 shows an example of a breakdown of the reception power when the cell that base station apparatus 400 covers is in an excessive interference state, and the excessive interference is caused by the reception power by the mobile station apparatus that designates base station apparatus 400 as the non-primary base station and that performs communication that belongs to the QoS class where the minimum guaranteed rate is not defined.

In FIG.10, E-DCH Al reception power 501 is the reception power by mobile station apparatuses that use the E-DCH, designate base station apparatus 400 as the non-primary base station and perform communication that belongs to the QoS class where the minimum guaranteed rate is not defined. E-DCH-A2 reception power 502 is the reception power by mobile station apparatuses that use the E-DCH, designate base station apparatus 400 as the non-primary base station and perform communication that belongs to a QoS class where the minimum guaranteed rate is defined.

E-DCH-B reception power 503 is the reception power by mobile station apparatuses that use the E-DCH and designate base station apparatus 400 as the primary base station, and the reception power by mobile station apparatuses that use the E-DCH and are not in soft handover. Then, reception power α507 is the power of the sum of thermal noise power 504; interference power 505 from other cells; DCH reception power 506 by mobile station apparatuses using the DCH; E-DCH-B reception power 503, and E-DCH-A2 reception power 502. Then, total reception power 508 is the sum of the reception power α507 and E-DCH-A1 reception power 501.

Embodiment 2 reduces the E-DCH-A1 reception power until the desired E-DCH-A1 reception power and removes excessive reception power 509, which is part exceeding RoT threshold Th511 in the total reception power. Further, the present power of each mobile station apparatus included in E-DCH-A1 is controlled to be decreased by the same rate. In other words, E-DCH-A1 reception power 501 is reduced until desired E-DCH-A1 reception power 510. Information to report this reduction rate to each mobile station apparatus included in E-DCH-A1 is the "desired transmission power reduction rate".

Therefore, the desired transmission power reduction rate in Embodiment 2 can be obtained from following equation (2). Desired transmission power reduction rate = desired E-DCH-A1 reception power/E-DCH-A1 reception power = (Rot threshold-reception power α)/E-DCH-A1 reception power...(2)

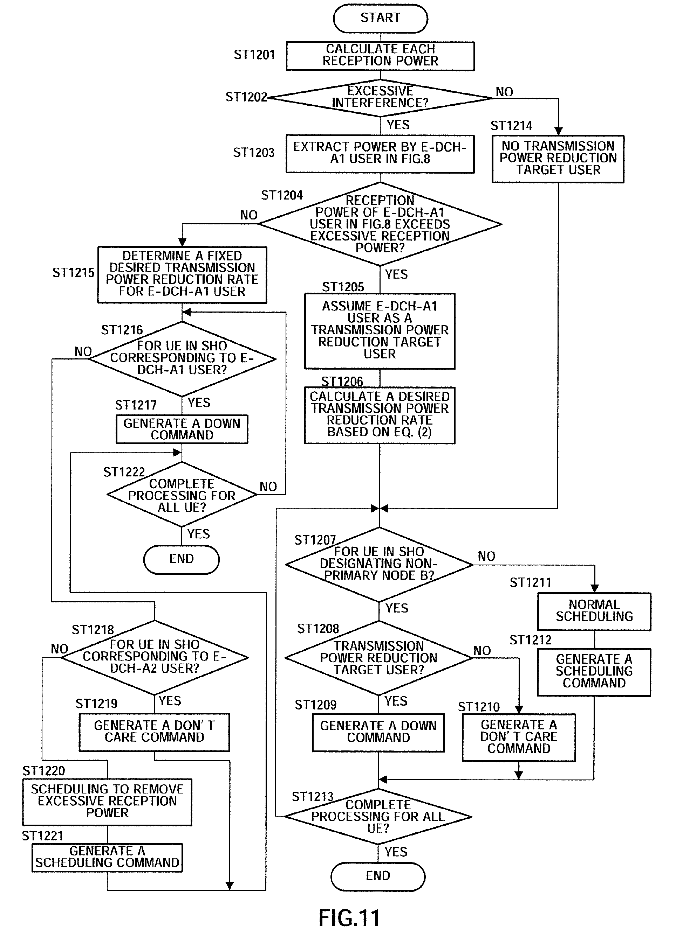

Next, the processing of uplink scheduling section 410 will be described in detail with reference to the flow diagram in FIG.11.

First, uplink scheduling section 410 calculates the reception power from each mobile station apparatus based on the SIRmeasurement value, divides this reception power corresponding to the state of the mobile station apparatus-that is, mobile station apparatuses using a dedicated channel, and mobile station apparatuses using the E-DCH (this group is further divided into mobile station apparatuses that designate base station apparatus 400 as the primary base station, mobile station apparatuses that designate base station apparatus 400 as the non-primary base station and that perform communication that belongs to the QoS class where the minimum guaranteed rate is not defined, mobile station apparatuses that designate base station apparatus 400 as the non-primary base station and that perform communication that belongs to the QoS class where the minimum guaranteed rate is defined, and mobile station apparatuses that use the E-DCH and that are not in soft handover), obtains the reception power for the groups, and obtains a breakdown of the reception power for the groups in the total reception power as shown in FIG.10 (step ST1201).

In step ST1202, uplink scheduling section 410 compares the total reception power information with the RoT threshold and determines whether excessive interference occurs or not.

When it is determined that excessive interference occurs (step S1202: YES), uplink scheduling section 410 extracts the reception power by an E-DCH-A1 user (mobile station apparatus) in FIG.10 --that is, reception power by the mobile station apparatus that designates base station apparatus 400 as the non-primary base station and that performs communication that belongs to the QoS class where the minimum guaranteed rate is not defined (step ST1203).

In step ST1204, uplink scheduling section 410 determines whether the reception power by the E-DCH-A1 user extracted in step ST1203 exceeds the excessive reception power--that is, determines whether excessive interference occurring in the cell that base station apparatus 400 covers is caused by the reception power by the E-DCH-A1 user. As described above, "the excessive interference is caused by the reception power by the mobile station apparatus that designates base station apparatus 400 as the non-primary base station and that performs communication that belongs to a QoS class where a minimum guaranteed rate is not defined" means a case where the reception power indicated by the total reception power information exceeds the RoT threshold, and the excessive reception power is smaller than the reception power of the mobile station apparatus that designates base station apparatus 400 as the non-primary base station and that performs communication that belongs to the QoS class where the minimum guaranteed rate is not defined.

When it is determined that the reception power by the E-DCH-A1 user exceeds the excessive reception power (step ST1204: YES), uplink scheduling section 410 determines the E-DCH-A1 user as the transmission power reduction target user (step ST1205), and calculates a desired transmission power reduction rate based on the above-described equation (2) (step ST1206). Then, the processing holds the calculated desired transmission power reduction rate and shifts to step ST1207.

Further, in step ST1207, uplink scheduling section 410 determines whether or not scheduling is for a mobile station apparatus in soft handover that designates base station apparatus 400 as the non-primary base station (non-primary NodeB).

When it is determined that scheduling is for the mobile station apparatus in soft handover that designates base station apparatus 400 as the non-primary base station (step ST1207: YES), uplink scheduling section 410 determines whether scheduling is for the transmission power reduction target user (step ST1208).

When it is determined that scheduling is for the transmission power reduction target user (step ST1208: YES), uplink scheduling section 410 generates a down command (step ST1209). This down command is transmitted, together with the held desired transmission power reduction rate, to the mobile station apparatus in soft handover that designates base station apparatus 400 as the non-primary base station and that performs communication that belongs to the QoS class where the minimum guaranteed rate is not defined.

When it is determined that scheduling is not for the transmission power reduction target user (step ST1208: NO), uplink scheduling section 410 generates a don't care command (step ST1210).

As the result of determination in step ST1207, when it is determined that scheduling is not for the mobile station apparatus in soft handover that designates base station apparatus 400 as the non-primary base station (step ST1207: NO), uplink scheduling section 410 performs normal scheduling (step ST1211), and generates a Scheduling command (step ST1212). After the processing of steps ST1209, ST1210 and ST1212, uplink scheduling section 410 determines whether or not scheduling is completed for all the mobile station apparatuses (step ST1213), and returns to step ST1207 when scheduling not completed (step ST1213: NO), and ends the processing when scheduling is completed (step ST1213: YES).

As the result of determination in step ST1202, when it is determined that excessive interference does not occur (step ST1202: NO), uplink scheduling section 410 sets no transmission power reduction target user (step ST1214), and the processing shifts to step ST1207.

When it is determined that the reception power by the E-DCH-A1 user does not exceed the excessive reception power (step ST1204: NO), uplink scheduling section 410 sets the E-DCH-A1 user as the first transmission power reduction target user, and determines a fixed desired transmission power reduction rate for the E-DCH-A1 user (step ST1215).

In step ST1216, uplink scheduling section 410 determines whether or not scheduling is for the mobile station apparatus corresponding to the E-DCH-A1 user in soft handover.

As the result of determination in step ST1216, when it is determined that scheduling is for the mobile station apparatus corresponding to the E-DCH-A1 user in soft handover (step ST1216: YES), uplink scheduling section 410 generates a down command (step ST1217).

As the result of determination in step ST1216, when it is determined that scheduling is not for the mobile station apparatus corresponding to the E-DCH-A1 user in soft handover (step ST1216: NO), uplink scheduling section 410 determines whether or not scheduling is for the mobile station apparatus corresponding to the E-DCH-A2 user in soft handover (step ST1218).

As the result of determination in step ST1218, when it is determined that scheduling is for the mobile station apparatus corresponding to the E-DCH-A2 user in soft handover (step ST1218: YES), uplink scheduling section 410 generates a don't care command (step ST1219).

As the result of determination in step ST1218, when it is determined that scheduling is not for the mobile station apparatus corresponding to the E-DCH-A2 user in soft handover (step ST1218: NO), uplink scheduling section 410 performs scheduling to remove the excessive reception power for a mobile station apparatus that is neither the mobile station apparatus corresponding to the E-DCH-A1 user in soft handover nor the mobile station apparatus corresponding to the E-DCH-A2 user in soft handover (step ST1220) (that is, E-DCH-B user), and generates a Scheduling command (step ST1221).

After the processing of steps ST1217, ST1219 and ST1221, uplink scheduling section 410 determines whether or not scheduling is completed for all the mobile station apparatuses (step ST1222), and returns to step ST1216 when scheduling is not completed (step ST1222: NO), and ends the processing when scheduling is completed (step ST1222: YES).

Although with the above descriptions, as the result of determination in step ST1218, when it is determined that scheduling is for the mobile station apparatus corresponding to the E-DCH-A2 user in soft handover (step ST1218: YES), uplink scheduling section 410 generates a don't care command (step ST1219), this is by no means limiting, and uplink scheduling section 410 may perform control to remove the excessive reception power by setting the E-DCH-A2 user as the second transmission power reduction target user. At this point, in addition to the E-DCH-A2 user, uplink scheduling section 410 may perform control to remove the excessive reception power by setting the E-DCH-B user as the third transmission power reduction target user. In other words, when excessive interference is not avoided only by adjusting the transmission power of the E-DCH-A1 user, it is only necessary to perform control so as to remove the excessive reception power by performing control of transmission power for mobile station apparatuses of users other than the E-DCH-A1 user.

The mobile station apparatus of Embodiment 2 is the same as mobile station apparatus 300 as described in Embodiment 1, and their descriptions will be omitted.

To summarize the above, when the cell of base station apparatus 400 is in the excessive interference state by the presence of mobile station apparatuses 300 in soft handover that designate base station apparatus 400 as the non-primary base station, base station apparatus 400 selects, from those mobile station apparatuses 300, mobile station apparatuses 300 for which the transmission rate is decreased. Then, base station apparatus 400 transmits the down instruction to only the selected mobile station apparatuses 300 in the dedicated channel, (and transmits don't care to mobile station apparatuses 300 that are not selected), and informs each of selected mobile station apparatuses 300 of the common desired transmission power reduction rate. Selected mobile station apparatuses 300 selects the maximum rates from the desired transmission power reduction rate received respectively from non-primary base stations, and performs transmission at the transmission rate corresponding to the transmission power obtained by multiplying the transmission power corresponding to the transmission rate instructed from the primary base station, by the desired transmission power reduction rate.

In this way, base station apparatus 400 selects a transmission rate reduction target appropriately from mobile station apparatuses 300 in soft handover that designate base station apparatus 400 as the non-primary base station, so that it is possible to prevent an excess reduction in transmission rate for the user requiring maintaining the transmission rate.

Further, as the transmission rate reduction target, base station apparatus 400 selects mobile station apparatus 300 that belongs to the QoS class where the minimum guaranteed rate is not defined, based on the QoS information of communication performed by mobile station apparatus 300 in soft handover that designates base station apparatus 400 as the non-primary base station.

In this way, only the mobile station apparatus that belongs to the QoS class where the minimum guaranteed rate is not defined, is targeted for transmission rate reduction, so that it is possible to decrease a possibility of not satisfying QoS of the mobile station apparatus that belongs to the QoS class where the minimum guaranteed rate is defined, that is, the mobile station apparatus with high priority.

Thus, according to Embodiment 2, base station apparatus 400 is provided with uplink scheduling section 410 that calculates the desired transmission power reduction rate for the transmission power reduction target among mobile station apparatuses in soft handover states in uplink packet communication, and transmits this desired transmission power reduction rate.

By this means, the mobile station apparatus that receives the desired transmission power reduction rate is able to acquire a direct indicator on transmission power reduction, thereby selecting appropriate transmission power and the transmission rate corresponding to this transmission power. Further, in base station apparatus 400, in contrast to the case that the conventional mobile station apparatus decreases the transmission rate by a fixed reduction level upon receiving a transmission rate instruction command"Down" from the base station apparatus, the mobile station apparatus promptly adjusts to transmission power appropriately in accordance with the desired transmission power reduction rate, so that it is possible to promptly adjust the reception power to an appropriate level. In other words, it is possible to implement a base station apparatus that is able to perform appropriate transmission rate control.

Further, as the transmission power reduction target, uplink scheduling section 410 selects mobile station apparatus 300 that transmits the non-primary base station designation information (that is, mobile station apparatus 300 that selects base station apparatus 400 as the non-primary base station) and that performs packet communication that belongs to the QoS class where the minimum guaranteed rate is not defined. uplink scheduling section 410 calculates a ratio of the reception power (E-DCH-A1 reception power 501) of the selected mobile station apparatus 300 and the desired reception power (desired E-DCH-A1 reception power 510) when the cell that base station apparatus 400 covers is subjected to excessive interference caused by the reception power of the selected mobile station apparatus 300.

By this means, it is possible to adjust the reception power to an appropriate level without influencing on communication of mobile station apparatuses except the mobile station apparatuses that designate base station apparatus 400 as the non-primary base station--that is, mobile station apparatuses with high priorities for base station apparatus 400--and calculate a just enough transmission power reduction rate. Further, as the mobile station apparatus targeted for transmission power reduction, the base station apparatus selects the mobile station apparatus that belongs to the QoS class where the minimum guaranteed rate is not defined (that is, the mobile station apparatus assumed not to be influenced very much even when the transmission power is reduced), so that it is possible to reduce the influence on communication of the mobile station apparatus for which the transmission power is reduced.

### (Embodiment 3)

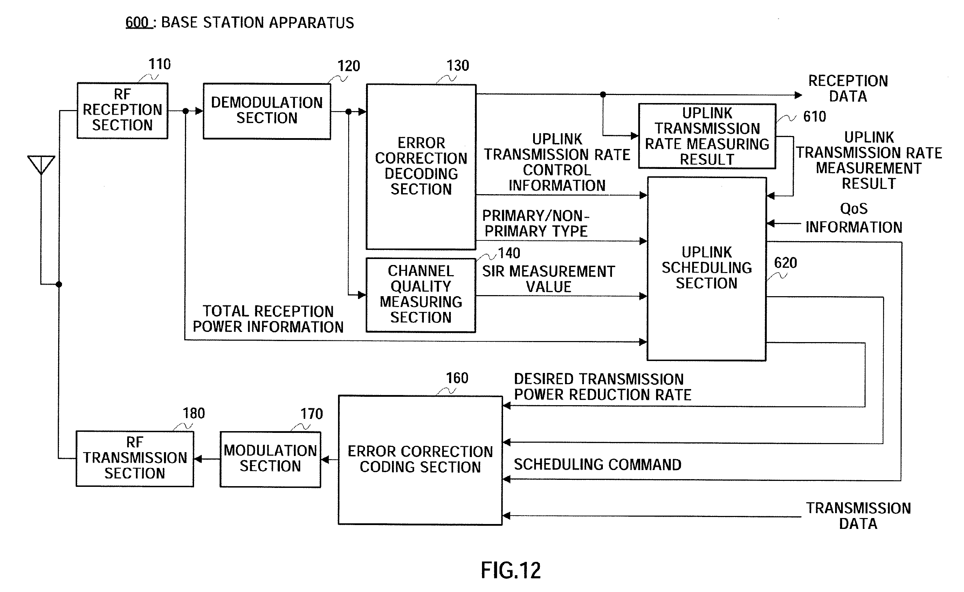

As shown in FIG.12, base station apparatus 600 of Embodiment 3 has uplink transmission rate measuring section 610 and uplink scheduling section 620. Uplink transmission rate measuring section 610 measures an average uplink transmission bit rate for each mobile station apparatus using received data output from error correction decoding section 130.

Uplink scheduling section 620 is the same as uplink scheduling section 150 in FIG.3 in that uplink transmission rate control information, primary/non-primary type and SIR measurement value are input, but differs from uplink scheduling section 150 in that QoS information, and measurement results of average uplink transmission bit rate from uplink transmission rate measuring section 610 are further input. With this Embodiment, uplink scheduling section 620 only uses the measurement result of the average uplink transmission bit rate of the mobile station apparatus that performs communication that belongs to the QoS class where the minimum guaranteed rate is defined, among the measurement results from uplink transmission rate measuring section 610.

Uplink scheduling section 150 generates a desired transmission power reduction rate when the cell that base station apparatus 600 covers is subjected to excessive interference caused by the reception power by the mobile station apparatus that designates as the non-primary base station. In contrast, uplink scheduling section 620 differs in generating a desired transmission power reduction rate for the mobile station apparatus when the cell that base station apparatus 600 covers is subjected to excessive interference caused by the mobile station apparatus that designates base station apparatus 600 as the non-primary base station and performs communication that belongs to the QoS class where the minimum guaranteed rate is not defined, and, inaddition, the mobile station apparatus that designates base station apparatus 600 as the non-primarybase station, performs communication that belongs to the QoS class where the minimum guaranteed rate is defined, and has the sufficient allowance in the measured average uplink transmission bit rate for the minimum guaranteed rate.

The determination whether "a mobile station apparatus has the sufficient allowance in the measured average uplink transmission bit rate for the minimum guaranteed rate" is made basically by determining whether a difference between the measured average uplink transmission bit rate and the minimum guaranteed rate is greater than a predetermined threshold. When the difference is greater than the predetermined threshold, the mobile station apparatus is determined to have a sufficient allowance. In addition, not limited to the difference between the measured average uplink transmission bit rate and the minimum guaranteed rate, the determination may be made by using a ratio between the measured average uplink transmission bit rate and the minimum guaranteed rate, and determining whether or not the ratio is greater than a predetermined threshold. It is only necessary to be able to specify the mobile station apparatus that has the sufficient allowance in the average uplink bit rate for the minimum guaranteed rate--that is, the mobile station apparatus in the communication state that is not influenced very much even when the transmission rate is reduced.

In addition, "excessive interference caused by the mobile station apparatus that designates base station apparatus 600 as the non-primary base station and that performs communication that belongs to the QoS class where the minimum guaranteed rate is not defined, and by the mobile station apparatus that designates base station apparatus 600 as the non-primary base station, performs communication that belongs to the QoS class where the minimum guaranteed rate is defined, and has the sufficient allowance in the measured average uplink transmission bit rate for the minimum guaranteed rate" means a case where the reception power indicated by the total reception power information exceeds the RoT threshold, and the excessive reception power is smaller than the reception power of the mobile station apparatus that designates base station apparatus 600 as the non-primary base station and that performs communication that belongs to the QoS class where the minimum guaranteed rate is not defined, and the mobile station apparatus that designates base station apparatus 600 as the non-primary base station, performs communication that belongs to the QoS class where the minimum guaranteed rate is defined, and has the sufficient allowance in the measured average uplink transmission bit rate for the minimum guaranteed rate. Details of processing of uplink scheduling section 620 will be described later.

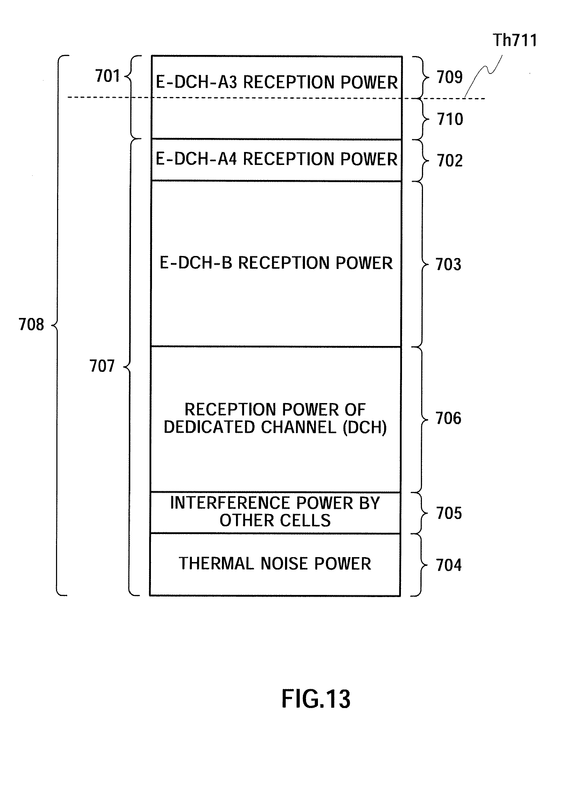

Here, the desired transmission power reduction rate in Embodiment 3 will be described with reference to FIG.13.

FIG.13 shows an example of a breakdown of the reception power when the cell that base station apparatus 600 covers is in the excessive interference state, and the excessive interference is caused by the mobile station apparatus that designates base station apparatus 600 as the non-primary base station and that performs communication that belongs to the QoS class where the minimum guaranteed rate is not defined, and the mobile station apparatus that designates base station apparatus 600 as the non-primary base station, performs communication that belongs to the QoS class where the minimum guaranteed rate is defined, and has the sufficient allowance in the measured average uplink transmission bit rate for the minimum guaranteed rate.

In FIG.13, E-DCH-A3 reception power 701 is the reception power by mobile station apparatuses that use the E-DCH, designate base station apparatus 600 as the non-primary base station and perform communication that belongs to the QoS class where the minimum guaranteed rate is not defined, and by mobile station apparatuses that designate base station apparatus 600 as the non-primary base station, perform communication that belongs to the QoS class where the minimum guaranteed rate is defined, and have a sufficient allowance in the measured average uplink transmission bit rate for the minimum guaranteed rate.

E-DCH-A4 reception power 702 is the reception power by mobile station apparatuses that use the E-DCH, designate base station apparatus 600 as the non-primary base station, perform communication that belongs to the QoS class where the minimum guaranteed rate is defined, and do not have a sufficient allowance in the measured average uplink transmission bit rate for the minimum guaranteed rate.

E-DCH-B reception power 703 is the reception power by mobile station apparatuses that use the E-DCH and designate base station apparatus 600 as the primary base station, and the reception power by mobile station apparatuses that use the E-DCH and are not in soft handover. Then, reception power α707 is the power of the sum of thermal noise power 704, interference power 705 from other cells, DCH reception power 706 by mobile station apparatuses using the DCH, E-DCH-B reception power 703, and E-DCH-A4 reception power 702. Then, total reception power 708 is the sum of the reception power α707 and E-DCH-A3 reception power 701.

Embodiment 3 reduces the E-DCH-A3 reception power until the desired E-DCH-A3 reception power and removes excessive reception power 709, which is part exceeding RoT threshold Th711 in the total reception power. Further, the current power of each mobile station apparatus included in E-DCH-A3 is controlled to be decreased by the same rate. In other words, E-DCH-A3 reception power 709 is reduced until desired E-DCH-A3 reception power 710. Information to report this reduction rate to each mobile station apparatus included in E-DCH-A3 is the "desired transmission power reduction rate."

Therefore, the desired transmission power reduction rate in Embodiment 3 can be obtained from following equation (3). Desired transmission power reduction rate = desired E-DCH-A3 reception power/E-DCH-A3 reception power = (Rot threshold-reception power α)/E-DCH-A3 reception power...(3)

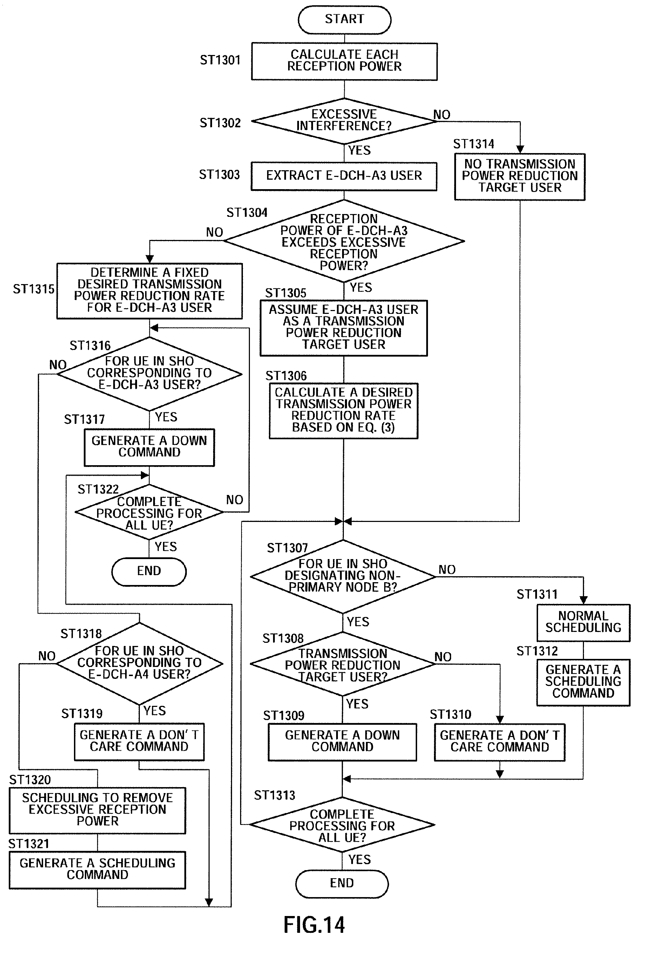

Next, the processing of uplink scheduling section 620 will be described in detail with reference to the flow diagram in FIG.14.

First, uplink scheduling section 620 calculates the reception power from each mobile station apparatus based on the SIR measurement value, divides the reception power corresponding to the state of the mobile station apparatus--that is, mobile station apparatuses using a dedicated channel, and mobile station apparatuses using the E-DCH (this group is further divided into mobile station apparatuses that designate base station apparatus 600 as the primary base station, mobile station apparatuses that designate base station apparatus 600 as the non-primary base station and that perform communication that belongs to the QoS class where the minimum guaranteed rate is not defined, and mobile station apparatuses that designate base station apparatus 600 as the non-primary base station, perform communication that belongs to the QoS class where the minimum guaranteed rate is defined, and have a sufficient allowance in the measured average uplink transmission bit rate for the minimum guaranteed rate, mobile station apparatuses that designate base station apparatus 600 as the non-primary base station, perform communication that belongs to the QoS class where the minimum guaranteed rate is defined, and have no sufficient allowance in the measured average uplink transmission bit rate for the minimum guaranteed rate, and mobile station apparatuses that use the E-DCH and are not in soft handover), obtains the reception power for the groups, and obtains breakdowns of the reception power for the groups in the total reception power as shown in FIG.14 (step ST1301).

In step ST1302, uplink scheduling section 620 compares the total reception power information with the RoT threshold and determines whether excessive interference occurs or not.

When it is determined that excessive interference occurs (step S1302: YES), uplink scheduling section 620 extracts the reception power by E-DCH-A3 users (mobile station apparatuses) in FIG. 14 --that is, reception power by the mobile station apparatus that uses the E-DCH, designates base station apparatus 600 as the non-primary base station and performs communication that belongs to the QoS class where the minimum guaranteed rate is not defined, and by the mobile station apparatus that designates base station apparatus 600 as the non-primary base station, performs communication that belongs to the QoS class where the minimum guaranteed rate is defined, and has the sufficient allowance in the measured average uplink transmission bit rate for the minimum guaranteed rate (step ST1303).

In step ST1304, uplink scheduling section 620 determines whether the reception power by the E-DCH-A3 users extracted in step ST1303 exceeds the excessive receptionpower--that is, whether excessive interference occurring in the cell that base station apparatus 600 covers is caused by the reception power by the E-DCH-A3 users.

When it is determined that the reception power by the E-DCH-A3 users exceeds the excessive reception power (step ST1304: YES), uplink scheduling section 620 determines the E-DCH-A3 users as transmission power reduction target users (step ST1305), and calculates a desired transmission power reduction rate based on the above-described equation (3) (step ST1306). Then, the processing holds the calculated desired transmission power reduction rate and shifts to step ST1307.

Further, in step ST1307, uplink scheduling section 620 determines whether or not scheduling is for the mobile station apparatus in soft handover that designates base station apparatus 600 as the non-primary base station (non-primary NodeB).

When it is determined that scheduling is for the mobile station apparatus in soft handover that designates base station apparatus 600 as the non-primary base station (step ST1307: YES), uplink scheduling section 620 determines whether scheduling is for the transmission power reduction target user (step ST1308).

When it is determined that scheduling is for the transmission power reduction target user (step ST1308: YES), uplink scheduling section 620 generates a down command (step ST1309). This down command is transmitted, together with the held desired transmission power reduction rate, to the mobile station apparatus in soft handover that designates base station apparatus 600 as the non-primary base station and that performs communication that belongs to the QoS class where the minimum guaranteed rate is not defined, and the mobile station apparatus in soft handover that designates base station apparatus 600 as the non-primary base station and that performs communication that belongs to the QoS class where the minimum guaranteed rate is defined and that has the sufficient allowance in the measured average uplink transmission bit rate for the minimum guaranteed rate.

When it is determined that scheduling is not for the transmission power reduction target user (step ST1308: NO), uplink scheduling section 620 generates a don't care command (step ST1310).

As the result of determination in step ST1307, when it is determined that scheduling is not for a mobile station apparatus in soft handover that designates as base station apparatus 600 the non-primary base station (step ST1307: NO), uplink scheduling section 620 performs normal scheduling (step ST1311), and generates a Scheduling command (step ST1312). After the processing of steps ST1309, ST1310 and ST1312, uplink scheduling section 620 determines whether or not scheduling is completed for all the mobile station apparatuses (step ST1313), and returns to step ST1307 when scheduling is not completed (step ST1313: NO), and ends the processing when scheduling is completed (step ST1313: YES).

As the result of determination in step ST1302, when it is determined that excessive interference does not occur (step ST1302: NO), uplink scheduling section 620 sets no transmission power reduction target user (step ST1314), and the processing shifts to step ST1307.

When it is determined that the reception power by the E-DCH-A3 user does not exceed the excessive reception power (step ST1304: NO), uplink scheduling section 620 sets the E-DCH-A3 user as the first transmission power reduction target user, and determines a fixed desired transmission power reduction rate for the E-DCH-A3 user (step ST1315).

In step ST1316, uplink scheduling section 620 determines whether or not scheduling is for the mobile station apparatus corresponding to the E-DCH-A3 user in soft handover.

As the result of determination in step ST1316, when it is determined that scheduling is for the mobile station apparatus corresponding to the E-DCH-A3 user in soft handover (step ST1316: YES), uplink scheduling section 620 generates a down command (step ST1317).

As the result of determination in step ST1316, when it is determined that scheduling is not for the mobile station apparatus corresponding to the E-DCH-A3 user in soft handover (step ST1316: NO), uplink scheduling section 620 determines whether or not scheduling is for a mobile station apparatus corresponding to an E-DCH-A4 user in soft handover (step ST1318).

As the result of determination in step ST1318, when it is determined that scheduling is for the mobile station apparatus corresponding to the E-DCH-A4 user in soft handover (step ST1318: YES), uplink scheduling section 620 generates a don't care command (step ST1319) .

As the result of determination in step ST1318, when it is determined that scheduling is not for the mobile station apparatus corresponding to the E-DCH-A4 user in soft handover (step ST1318: NO), uplink scheduling section 620 performs scheduling to remove the excessive reception power for the mobile station apparatus (that is, E-DCH-B user), which is neither the mobile station apparatus corresponding to the E-DCH-A3 user in soft handover nor the mobile station apparatus corresponding to the E-DCH-A4 user in soft handover (step ST1320), and generates a Scheduling command (step ST1321).

After the processing of steps ST1317, ST1319 and ST1321, uplink scheduling section 620 determines whether or not scheduling is completed for all the mobile station apparatuses (step ST1322), and returns to step ST1316 when scheduling is not completed (step ST1322: NO), and ends the processing when scheduling is completed (step ST1322: YES).

Although with the above descriptions, as the result of determination in step ST1318, when it is determined that scheduling is for the mobile station apparatus corresponding to the E-DCH-A4 user in soft handover (step ST1318: YES), uplink scheduling section 620 generates a don't care command (step ST1319), this is by no means limiting, and uplink scheduling section 620 may control to remove the excessive reception power by setting the E-DCH-A4 user as the second transmission power reduction target user. At this point, in addition to the E-DCH-A4 user, uplink scheduling section 620 may perform control to remove the excessive reception power by setting the E-DCH-B user as the third transmission power reduction target user. In other words, when excessive interference is not avoided only by adjusting the transmission power of the E-DCH-A3 user, it is only necessary to perform control so as to remove the excessive reception power by performing control of transmission power for mobile station apparatuses of users other than the E-DCH-A3 user.

The mobile station apparatus of Embodiment 3 is the same as mobile station apparatus 300 as described in Embodiment 1, and their descriptions will be omitted.

To summarize the above, when the cell of base station apparatus 600 is in the excessive interference state by the presence of mobile station apparatuses 300 in soft handover that designate base station apparatus 600 as the non-primary base station, base station apparatus 600 selects , from those mobile station apparatuses 300, mobile station apparatuses 300 for which the transmission rate is reduced. Then, base station apparatus 600 transmits the down instruction to only the selected mobile station apparatuses 300 in the dedicated channel, (and transmits don't care to mobile station apparatuses 300 that are not selected), and informs each of selected mobile station apparatuses 300 of the common desired transmission power reduction rate. Each of selected mobile station apparatuses 300 selects a maximum rate from the desired transmission power reduction rates received respectively from the non-primarybase stations, and performs transmission at the transmission rate corresponding to the transmission power obtained by multiplying the transmission power corresponding to the transmission rate instructed from the primary base station by the desired transmission power reduction rate.

In this way, base station apparatus 600 selects a transmission rate reduction target appropriately from mobile station apparatuses 300 in soft handover that designate base station apparatus 600 as the non-primary base station, so that it is possible to prevent an excess reduction in transmission rate for the user requiring maintaining the transmission rate.

Further, base station apparatus 600 selects, as the transmission rate reduction target ,mobile station apparatus 300 in soft handover that designates base station 600 as the non-primary base station and that belongs to the QoS class where the minimum guaranteed rate is not defined, and mobile station apparatus 300 in soft handover that designates base station 600 as the non-primary base station, belongs to the QoS class where the minimum guaranteed rate is defined, and has the difference between the measured average transmission bit rate and the minimum guaranteed rate greater than a predetermined threshold.

In this way, the mobile station apparatus that belongs to the QoS class where the minimum guaranteed rate is not defined, and the mobile station apparatus that belongs to the QoS class where the minimum guaranteed rate is defined and that has the sufficient allowance for the minimum guaranteed rate are targeted for transmission rate reduction, and it is thereby possible to decrease a possibility of not satisfying QoS of the mobile station apparatus that belongs to the QoS class where the minimum guaranteed rate is defined, that is, mobile station apparatus with high priority. Further, a reduction in transmission rate becomes smaller in each mobile station apparatus 300, thereby preventing a rapid reduction in transmission rates of each mobile station apparatus 300.

Thus, according to Embodiment 3, base station apparatus 600 is provided with uplink scheduling section 620 that calculates a desired transmission power reduction rate for a transmission power reduction target among mobile station apparatuses in soft handover states in uplink packet communication, and transmits the desired transmission power reduction rate.

By this means, the mobile station apparatus that receives the desired transmission power reduction rate is able to acquire a direct indicator on transmission power reduction, thereby selecting appropriate transmission power and the transmission rate corresponding to this transmission power. Further, in base station apparatus 600, in contrast to the case that the conventional mobile station apparatus decreases the transmission rate by a fixed reduction level upon receiving a transmission rate instruction command"Down" from the base station apparatus, the mobile station apparatus promptly adjusts transmission power appropriately in accordance with the desired transmission power reduction rate, so that it is possible to promptly adjust the reception power to an appropriate level. In other words, it is possible to implement a base station apparatus that is able to perform appropriate transmission rate control.

Further, uplink scheduling section 620 selects, as the transmission power reduction target, mobile station apparatus 300 that transmits the non-primary base station designation information (that is, mobile station apparatus that selects base station apparatus 600 as the non-primary base station) and that performs packet communication that belongs to the QoS class where the minimum guaranteed rate is not defined, and mobile station apparatus 300 that transmits the non-primary base station designation information to base station apparatus 600, performs packet communication that belongs to the QoS class where the minimum guaranteed rate is defined, and has the sufficient allowance in the measured average uplink transmission bit rate for the minimum guaranteed rate. Uplink scheduling section 620 then calculates a ratio of the reception power (E-DCH-A3 reception power 701) of the selected mobile station apparatus 300 and the desired reception power (desired E-DCH-A3 reception power 710) when the cell that base station apparatus 600 covers is subjected to excessive interference caused by the reception power of the selected mobile station apparatus 300.

By this means, it is possible to adjust the reception power to an appropriate level without influencing on communication of mobile station apparatuses except mobile station apparatuses that designate base station apparatus 600 as the non-primary base station--that is, mobile station apparatuses with high priorities for base station apparatus 100--and calculate a just enough transmission power reduction rate. Further, as the mobile station apparatus targeted for transmission power reduction, the base station apparatus selects a mobile station apparatus that performs packet communication that belongs to the QoS class where the minimum guaranteed rate is not defined, and a mobile station apparatus that performs packet communication that belongs to the QoS class where the minimum guaranteed rate is defined and that has the sufficient allowance in the measured average uplink transmission bit rate for the minimum guaranteed rate (that is, the mobile station apparatus assumed not to be influenced very much even when the transmission power is reduced), and it is thereby possible to reduce the influence on communication of the mobile station apparatus for which the transmission power is reduced.

### (Other Embodiment)

(1) Although with Embodiments 1 to 3, the base station apparatus calculates the desired transmission power reduction rate and transmits the result to the mobile station apparatus, the invention is by no means limited to this, and the base station apparatus may transmit to a mobile station apparatus targeted for power reduction, only the information as the basis for calculation of a desired transmission power reduction rate, and the mobile station apparatus may calculate the desired transmission power reduction rate.

In this case, in base station apparatus 100 of Embodiment 1, uplink scheduling section 150 performs control to transmit the desired E-DCH-A reception power and E-DCH-A reception power, or RoT threshold, reception power α and E-DCH-A reception power. Meanwhile, inmobile station apparatus 300, uplink transmission rate control section 330 calculates a desired transmission power reduction rate based on the information from base station apparatus 100, and by using this desired transmission power reduction rate and the like, determines the uplink transmission rate.

Further, in base station apparatus 400 of Embodiment 2, uplink scheduling section 410 performs control to transmit the desired E-DCH-A1 reception power and E-DCH-A1 reception power, or RoT threshold, reception power α and E-DCH-A1 reception power.

Furthermore, in base station apparatus 600 of Embodiment 3, uplink scheduling section 620 performs control to transmit the desired E-DCH-A3 reception power and E-DCH-A3 reception power, or RoT threshold, reception power α and E-DCH-A3 reception power.

(2) Although with Embodiments 1 to 3, the desired transmission power reduction rate is calculated in terms of the power, the invention is by no means limited to this, and the base station apparatus may transmit a reduction rate in terms of RoT (ratio of the power and thermal noise) and the thermal noise power to a mobile station apparatus targeted for transmission power transmission, and the mobile station apparatus may calculate a desired transmission power reduction rate based on the information from the base station apparatus.

In this case, the mobile station apparatus may calculate the desired transmission power reduction rate using a specification value of a receiver of the base station apparatus, without transmitting the thermal noise power from the base station apparatus to the mobile station apparatus.

A first aspect of the base station apparatus of the invention adopts a configuration provided with a transmission power reduction rate calculator that calculates a transmission power reduction rate for a transmission power reduction target among mobile station apparatuses in soft handover states in uplink packet communication, and an informer that transmits information of the transmission power reduction rate.

According to this configuration, the mobile station apparatus that receives the desired transmission power reduction rate is able to acquire a direct indicator on transmission power reduction, thereby selecting appropriate transmission power and the transmission rate corresponding to this transmission power. Further, in the base station apparatus, in contrast to the case that the conventional base station apparatus decreases the transmission rate by a fixed reduction level upon receiving a transmission rate instruction command"Down" from the base station apparatus, the mobile station apparatus is able to promptly adjust transmission power appropriately in accordance with the desired transmission power reduction rate, so that it is possible to promptly adjust the reception power to an appropriate level. In other words, it is possible to implement a base station apparatus that is able to perform appropriate transmission rate control.

A second aspect of the base station apparatus of the invention adopts a configuration where the transmission power reduction rate calculator selects, as the transmission power reduction target, the mobile station apparatus that transmits non-primary base station designation information, and calculates a ratio of desired reception power to the reception power of the transmission power reduction target as the transmission power reduction rate when the excessive interference is caused by reception power of the transmission power reduction target.

According to this configuration, it is possible to adjust the reception power to an appropriate level without influencing on communication of mobile station apparatuses except mobile station apparatuses that designate base station apparatus 100 as the non-primary base station--that is, mobile station apparatuses with high priorities for base station apparatus 100--,and calculate a just enough transmission power reduction rate.

A third aspect of the base station apparatus of the invention adopts a configuration where the transmission power reduction rate calculator selects, as the transmission power reduction target, the mobile station apparatus that transmits non-primary base station designation information and that performs packet communication that belongs to the QoS class where the minimum guaranteed rate is not defined, and calculates, as the transmission power reduction rate, a ratio of desired reception power to the reception power of the transmission power reduction target when excessive interference is caused by reception power of the transmission power reduction target.

According to this configuration, it is possible to adjust the reception power to an appropriate level without influencing on communication of mobile station apparatuses except mobile station apparatuses that designate the base station apparatus as the non-primary base station--that is, mobile station apparatuses with high priorities for base station apparatus 100--,and calculate a just enough transmission power reduction rate. Further, the base station apparatus selects, as the mobile station apparatus targeted for transmission power reduction, a mobile station apparatus that performs packet communication that belongs to the QoS class where the minimum guaranteed rate is not defined (that is, the mobile station apparatus assumed not to be influenced very much even when the transmission power is reduced), and it is thereby possible to reduce the influence on communication of the mobile station apparatus for which the transmission power is reduced.

A fourth aspect of the base station apparatus of the invention adopts a configuration where the transmission power reduction rate calculator selects, as the transmission power reduction target, the mobile station apparatus that transmits the non-primary base station designation information and that performs packet communication that belongs to the QoS class where the minimum guaranteed rate is not defined, and the mobile station apparatus which transmits the non-primary base station designation information, performs packet communication that belongs to the QoS class where the minimum guaranteed rate is defined, and has the sufficient allowance in the measured average bit rate for the minimum guaranteed rate. The transmission power reduction rate calculator then calculates, as the transmission power reduction rate, a ratio of desired reception power to the reception power of the transmission power reduction target when excessive interference is caused by reception power of the transmission power reduction target.

According to this configuration, it is possible to adjust the reception power to an appropriate level without influencing on communication of mobile station apparatuses except mobile station apparatuses that designate the base station apparatus as the non-primary base station--that is, mobile station apparatuses with high priorities for base station apparatus 100--,and calculate a just enough transmission power reduction rate. Further, the base station apparatus selects, as the mobile station apparatus targeted for transmission power reduction, the mobile station apparatus that performs packet communication that belongs to the QoS class where the minimum guaranteed rate is not defined, and the mobile station apparatus that performs packet communication that belongs to the QoS class where the minimum guaranteed rate is defined and that has the sufficient allowance in the measured average uplink transmission bit rate for the minimum guaranteed rate (that is, the mobile station apparatus assumed not to be influenced very much even when the transmission power is reduced), and it is thereby possible to reduce the influence on communication of the mobile station apparatus for which the transmission power is reduced.

A first aspect of the mobile station apparatus of the invention adopts a configuration provided with a receiver that receives information of a transmission power reduction rate, and a transmission rate controller that obtains appropriate transmission power from the maximum reduction rate among the information of the transmission power reduction rate, and selects a transmission rate corresponding to the appropriate transmission power.

According to this configuration, a direct indicator on transmission power reduction can be acquired, thereby selecting appropriate transmission power and the transmission rate corresponding to this transmission power. In other words, it is possible to implement a mobile station apparatus that is able to perform appropriate transmission rate control. Further, when the information of the desired transmission power reduction rate is received from a plurality of base station apparatuses, the transmission rate corresponding to the transmission power obtained from the maximum reduction rate is selected among the information, so that it is possible to make the reception power appropriate in all the base station apparatuses that transmit desired transmission power reduction rates.

An aspect of the transmission rate control method of the invention has the steps of calculating a transmission power reduction rate for a transmission power reduction target among mobile station apparatuses in soft handover states in uplink packet communication, and transmitting the transmission power reduction rate.

By this means, on the reception side, a direct indicator on transmission power reduction can be acquired, thereby selecting appropriate transmission power and the transmission rate corresponding to this transmission power. Further, on the transmission side, the reception side promptly adjusts transmission power appropriately in accordance with the desired transmission power reduction rate, so that it is possible to promptly adjust the reception power to an appropriate level. In other words, it is possible to perform appropriate transmission rate control.

The present application is based on Japanese Patent Application No.2004-303246 filed on October 18, 2004, the entire content of which is expressly incorporated by reference herein.

### Industrial Applicability

The base station apparatus, mobile station apparatus and transmission rate control method of the present invention have an advantage of enabling appropriate transmission rate control, and particularly, are useful as the mobile station apparatus that performs communication by HSUPA, base station apparatus and transmission rate control method applied to these mobile station apparatus and base station apparatus.

## Claims

1. A base station apparatus comprising:
a transmission power reduction rate calculating section that calculates a transmission power reduction rate for a transmission power reduction target among mobile station apparatuses in soft handover states in uplink packet communication; and
an informing section that transmits information of the transmission power reduction rate.

2. The base station apparatus according to claim 1, wherein the transmission power reduction rate calculating section selects, as the transmission power reduction target, a mobile station apparatus that transmits non-primary base station designation information, and calculates, as the transmission power reduction rate, a ratio of desired reception power to reception power of the transmission power reduction target when excessive interference is caused by the reception power of the transmission power reduction target.

3. The base station apparatus according to claim 1, wherein the transmission power reduction rate calculating section selects, as the transmission power reduction target, a mobile station apparatus that transmits non-primary base station designation information and performs packet communication that belongs to a QoS class where a minimum guaranteed rate is not defined, and calculates, as the transmission power reduction rate, a ratio of desired reception power to reception power of the transmission power reduction target when excessive interference is caused by the reception power of the transmission power reduction target.

4. The base station apparatus according to claim 1, wherein, the transmission power reduction rate calculating section:
selects, as the transmission power reduction target, a mobile station apparatus that transmits non-primary base station designation information and that performs packet communication that belongs to a QoS class where a minimum guaranteed rate is not defined, and a mobile station apparatus that transmits the non-primary base station designation information, performs packet communication that belongs to a QoS class where the minimum guaranteed rate is defined, and has sufficient allowance in a measured average bit rate for a minimum guaranteed rate; and
calculates, as the transmission power reduction rate, a ratio of desired reception power to the reception power of the transmission power reduction target when excessive interference is caused by reception power of the transmission power reduction target.

5. A mobile station apparatus comprising:
a receiving section that receives information of a transmission power reduction rate; and
a transmission rate control section that obtains appropriate transmission power from a maximum reduction rate among the information of the transmission power reduction rate, and selects a transmission rate corresponding to the appropriate transmission power.

6. A transmission rate control method comprising the steps of:
calculating a transmission power reduction rate for a transmission power reduction target among mobile station apparatuses in soft handover states in uplink packet communication; and
transmitting the transmission power reduction rate.
